(19) Europäisches Patentamt
European Patent Office
Office européen des brevets

(11) **EP 4 582 216 A1**

(12) **EUROPÄISCHE PATENTANMELDUNG**

(43) Veröffentlichungstag:
**09.07.2025 Patentblatt 2025/28**

(21) Anmeldenummer: **25150016.1**

(22) Anmeldetag: **02.01.2025**

(51) Internationale Patentklassifikation (IPC):
**B23Q 17/22** *(2006.01)* **B23Q 11/00** *(2006.01)*
**B23Q 11/10** *(2006.01)*

(52) Gemeinsame Patentklassifikation (CPC):
**B23Q 17/22; B23Q 17/2233;** B23Q 11/005;
B23Q 11/1015; B23Q 11/1023

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **08.01.2024 AT 42024**

(71) Anmelder: **Pro2Future GmbH**
**4040 Linz (AT)**

(72) Erfinder: **Brillinger, Markus**
**8020 Graz (AT)**

(74) Vertreter: **Peham, Alois**
**Lederergasse 23/11/139**
**1080 Wien (AT)**

(54) **VERFAHREN ZUR BESTIMMUNG DER POSITION EINES IN EINER WERKZEUGMASCHINE EINGESPANNTEN WERKSTÜCKES UND MESSEINRICHTUNG ZUR DURCHFÜHRUNG DES VERFAHRENS**

(57) Die Erfindung betrifft ein Verfahren und eine Messeinrichtung zur Bestimmung der Position eines in einer Werkzeugmaschine eingespannten Werkstückes, wobei die Werkzeugmaschine ein rotierendes Werkzeug umfasst und Werkstück und Werkzeug von einem Fluid umgeben sind, in dem sich aufgrund der Rotation des Werkzeuges ein Strömungsfeld entwickelt, wobei die auf das Werkzeug (WZ) wirkende Kraft($F_x$, $F_y$) und das Drehmoment ($M_R$) durch das Fluid ermittelt wird und aus der Veränderung der Kraft und des Drehmoments der Abstand zwischen dem Werkzeug (WZ) und der dem Werkzeug zugewandten Oberfläche des Werkstücks (WS) ermittelt wird.

Fig.1a

Fig. 1b

**Beschreibung**

Die Erfindung betrifft ein Verfahren zur Bestimmung der Position eines Werkstückes und eine Messeinrichtung zur Durchführung des Verfahrens.

Bei Werkstücken, deren Abmaße stark schwanken, wie dies beispielsweise bei gegossenen Werkstücken der Fall sein kann, müssen diese für eine anschließende zerspanende Bearbeitung in die Werkzeugmaschine eingespannt und eingemessen werden, damit ein sogenannter Nullpunkt des Werkstücks d.h. der Koordinatenursprung des zu bearbeitenden Teils auf der Werkzeugmaschine definiert werden kann.

Wie aus der EP4152111 A1 bekannt, kann das Einmessen eines Werkstücks mittels Taster erfolgen. Nach dieser Schrift wird ein Bediener einer Werkzeugmaschine darin unterstützt, mittels eines Tasters ein Werkstück und/oder ein Spannmittel im Arbeitsraum der Werkzeugmaschine so einzumessen, dass das auf einem Bildschirm einer Numerischen Steuerung angezeigte Modell des Arbeitsraumes hinreichend gut mit der Realität übereinstimmt. Hierzu kann der Bediener den Taster frei um das Werkstück bewegen und bekommt, basierend auf einem Abstand des virtuellen Tasters zum virtuellen Werkstück, automatisiert geplante Antastpunkte und eine Antastrichtung angezeigt, zusammen mit einer Qualitätsinformation. Ist die Qualität ausreichend, kann der Bediener per Tastendruck einen Antastvorgang und das Einmessen des Werkstücks auslösen.

Der Erfindung liegt die Aufgabe zugrunde, den aufwändigen Vorgang des Einmessens zu vereinfachen.

Erfindungsgemäß geschieht dies mit einem Verfahren gemäß Anspruch 1. Vorteilhafte Ausgestaltungen ergeben sich aus den Unteransprüchen.

Die Erfindung basiert auf der Veränderung des Strömungsfeldes zwischen Werkzeug und Werkstück auf Grund einer Relativbewegung beispielsweise mit rotatorischen Anteil. Wird der Abstand zwischen Werkzeug und Werkstück verringert, ändert sich das Strömungsfeld.

Der rotatorische Anteil kann insbesondere durch die Bewegung des Werkzeugs, wie beispielsweise beim Fertigungsverfahren Fräsen, oder des Werkstücks, wie beispielsweise beim Drehen, oder beider Elemente eingebracht werden.

Die Erfindung wird anhand von Figuren näher erläutert.

Es zeigen beispielhaft:

Fig. 1a, 1b schematisch Strömungsfelder in einer Werkzeugmaschine;
Fig. 2 den Verlauf des Drehmoments in einem Antrieb bei Annäherung des Werkzeugs an das Werkstück.
Fig.3 schematisch den Einsatz eines Impellers am Werkzeug

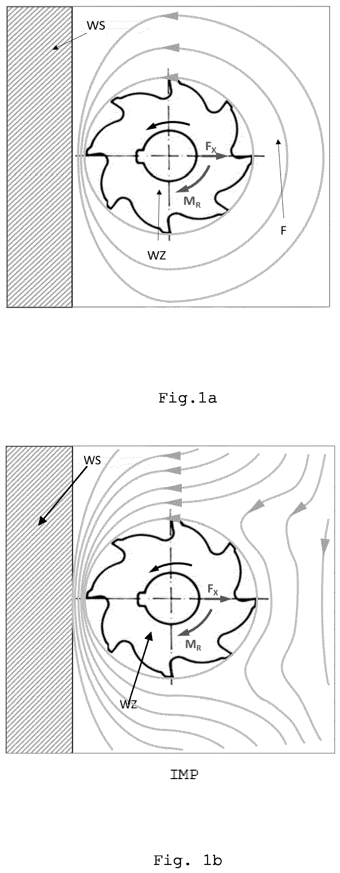

Die Darstellung gemäß Fig. 1a zeigt schematisch den Querschnitt eines Werkstücks WS und eines Fräsers als rotierendes Werkzeug WZ, sowie das durch Stromlinien dargestellte Strömungsfeld F des den Fräser umgebenden Fluids beispielsweise der Luft im Bearbeitungsraum einer Werkzeugmaschine.

Es kann zweckmäßig sein, die Luft im Bearbeitungsraum der Werkzeugmaschine beispielsweise mittels Gebläse mit Längs- und/oder Querströmung zu beaufschlagen, so dass sich bereits im Ruhezustand des Werkzeugs WZ ein Strömungsfeld F ausbildet. Die entsprechenden Strömungsverhältnisse sind in Fig. 1b schematisch dargestellt

Weiters kann es zweckmäßig sein, die Außenflächen des Werkzeugs WZ durch Kühlschmierstoffzufuhr zu beaufschlagen und das Strömungsfeld F zu verändern.

Die Beaufschlagung kann ggf. mittels Impeller, d.h. einem von einem ring- oder röhrenförmigen Gehäuse umschlossenen Propeller am Werkzeug erfolgen oder vom Werkzeug beabstandet zugeführt werden.

Wenn sich das rotationssymmetrische Werkzeug zu drehen beginnt, wird durch den Start der Drehbewegung eine Störung des idealisierterweise ruhenden, umgebenden viskosen Fluids bewirkt und es bildet sich um das Werkzeug ein rotationssymmetrisches Strömungsfeld aus. Bewegt sich das Werkzeug WZ nun zusätzlich zu der Drehbewegung auf das Werkstück WS zu, so ändert sich das rotationssymmetrische Strömungsfeld zu einem asymmetrischen Strömungsfeld.

Die Bewegung des Werkzeuges in einem viskosen Fluid - der umgebenden Luft - führt zu einer Kraftwirkung des Fluids auf das Werkzeug WZ, welche auf die Schubspannungen zwischen dem Werkzeug WZ und dem viskosen Fluid an der Oberfläche des Werkzeugs WZ zurückzuführen sind. Diese Schubspannungen hängen vom Gradienten der Geschwindigkeit des Strömungsfeldes des viskosen Fluids ab. Verändert sich also das Strömungsfeld, so verändern sich die Wandschubspannungen an der Oberfläche des Werkzeugs WZ und somit die Kraftwirkung auf dasselbe.

Erfindungsgemäß wird diese Veränderung der Kraftwirkung erfasst und daraus der Abstand zwischen dem Werkzeug und der dem Werkzeug zugewandten Oberfläche des Werkstücks ermittelt.

Die geltenden Grundlagen sind für einen idealisierten Fall ohne Turbulenzen im viskosen Fluid und mit einem rein zylindrischen Werkzeug in der Folge dargestellt.

Bei ruhender Luft und bewegungslosem Werkzeug sind die auf das Werkzeug wirkenden Kräfte und Drehmomente wie folgt:

$$F_x = 0\,N$$

$$F_y = 0\,N$$

$$M_R = 0 \, Nm$$

Mit *Fx* und *Fy* als Kraftkomponenten in einem rechtwinkelig zur Drehachse des Werkzeuges liegenden zweidimensionalen Koordinatensystem und $M_R$ als Drehmoment zufolge der Wandschubspannung des Strömungsfeldes F am Werkzeug WZ.

Beginnt sich nun das Werkzeug zu drehen, bildet sich im viskosen Fluid ein rotationssymmetrisches Strömungsfeld aus. Hierbei bestimmen sich die Kräfte in einem idealisierten Fall ohne Turbulenzen des Strömungsfeldes F zu:

$$M_R = -2 \pi \omega \eta L R^2$$

$$Fx = 0 \, N$$

$$Fy = 0 \, N$$

Die maßgeblichen Faktoren sind dabei die Winkelgeschwindigkeit $\omega$ (als Funktion der Drehzahl n), die dynamische Viskosität $\eta$, die Werkzeuglänge L und der Werkzeugradius R.

Das negative Vorzeichen ergibt sich auf Grund der bremsenden Wirkung in Bezug auf das Werkzeug WZ. Bewegt sich nun das Werkzeug zu dem Werkstück hin und hat einen Abstand a vom Werkstück, so verändert sich das Strömungsfeld weiterhin.

Durch den Spalt zwischen Werkzeug und Werkstück (Abstand a) verändert sich die Kraftsituation am Werkzeug zu:

$$M_R = -2 \pi \omega \eta L R^2 (A/((A^2-1)^{0,5}))$$

$$\underline{F_x = R \cdot L \cdot f(A)}$$
$$F_y = 0 \, N$$

Wobei f(A) eine Funktion des Abstandsmaß A ist mit

$$A = (R+a)/R$$

$F_y$ ist theoretisch 0, weil das Strömungsfeld F als symmetrisch angenommen wurde, in der Praxis dies aber nicht zutrifft und folglich $F_y$ ungleich 0 ist.

Die Veränderung der Kraftsituation am Werkzeug ist somit ein Maß für den Abstand a zwischen Werkzeug und Werkstück.

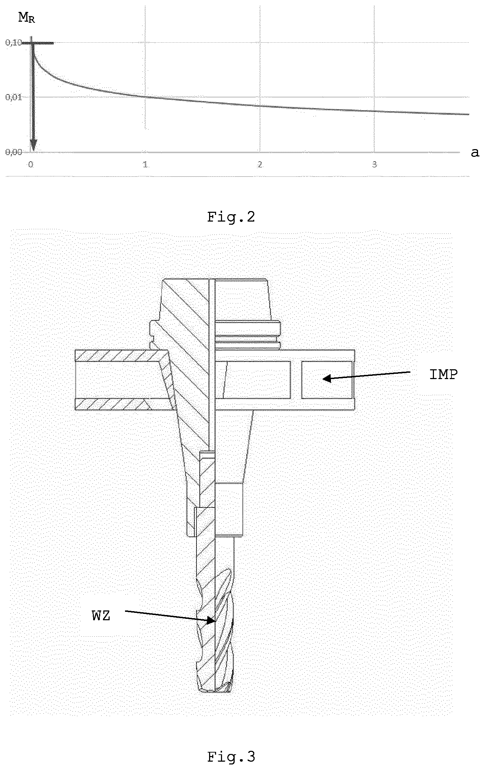

Ein beispielhafter Zusammenhang zwischen dem Drehmoment $M_R$ und dem Abstand a zwischen Werkzeug WZ und Werkstück WS ist in Fig. 2 dargestellt.

Bei vorgegebenen Bewegungsparametern des Werkzeugs WZ, wie beispielsweise der Drehzahl, oder der Geschwindigkeit in x- und y-Richtung, benötigt das Werkzeug WZ daher unterschiedlich viel Kraft, um diese vorgegebenen Bewegungsparameter exakt einzuhalten. Diese veränderte Kraftsituation wird von der Regelung der Werkzeugmaschine erfasst und ausgeglichen durch z.B. eine höhere Stromzufuhr für die Antriebsmotoren.

Diese Reaktion der Regler der Werkzeugmaschine wird erfindungsgemäß messtechnisch erfasst und daraus der Abstand zwischen Werkzeug und Werkstück ermittelt.

Es kann vorteilhaft sein, wenn mittels Methoden des Maschinellen Lernens die Bearbeitungsvorgänge überwacht und Abweichungen von den Standardprozessen ermittelt werden. Diese erkannten Abweichungen können dann beispielsweise dazu genutzt werden, die Abstandsermittlung zu korrigieren. Dazu kann in zweckmäßiger Weise ein künstliches Neuronales Netz vorgesehen werden.

Wie in Fig. 3 dargestellt, kann am Werkzeughalter, beispielsweise einer Fräseraufnahme, ein Impeller IMP, d.h. ein von einem ring- oder röhrenförmigen Gehäuse umschlossener Propeller angebracht sein, der im viskosen Fluid ein Strömungsfeld entlang des Werkzeugs WZ , beispielsweise des Fräsers bewirkt. Der Impeller IMP kann dabei gemeinsam mit dem Werkzeug WZ angetrieben werden.

Durch das zusätzliche Strömungsfeldes entlang des Werkzeugs WZwird eine Erhöhung des auf das Werkzeug wirkenden Drehmoments $M_R$ sowie der Kraftkomponenten $F_x$ und $F_y$ bewirkt und damit die Ermittlung des Abstandes zwischen dem Werkzeug WZ und der dem Werkzeug zugewandten Oberfläche des Werkstücks WS vereinfacht.

Ein damit erzielter weiterer vorteilhafter Effekt besteht darin, dass durch das erzwungene Strömungsfeld auch die Trajektorie der Späne (Flugbahn der Späne) beeinflusst werden kann. Bei optimaler Gestaltung ist somit ein wesentlich geringerer Reinigungsprozess der fertig bearbeiteten Werkstücke WS von der Späne nötig, da die Späne bereits während des Zerspanprozesses ausgeblasen werden und dadurch erhöhte Nacharbeitszeiten verringert werden.

Damit ist auch keine zusätzliche Druckluftzufuhr im Reinigungsprozess notwendig, wodurch die damit verbundenen Nachteile wie beispielsweise die aufwändige Drucklufterzeugung und die entsprechenden Leitungen vermieden werden können.

Bezugszeichenliste

| | |
|---|---|
| WS | Werkstück |
| WZ | Werkzeug |
| a | Abstand zwischen Werkstück und Werkzeug |
| F | Strömungsfeld des Fluids |
| $M_R$ | Drehmoment |
| $F_x$, $F_y$ | Kraftkomponenten |
| WZA | Werkzeugaufnahme |

IMP    Impeller

## Patentansprüche

1. Verfahren zur Bestimmung der Position eines in einer Werkzeugmaschine eingespannten Werkstückes, wobei die Werkzeugmaschine ein sich während des Bearbeitungsvorganges relativ zum Werkstück bewegendes Werkzeug umfasst und Werkstück und Werkzeug von einem Fluid umgeben sind, in dem sich aufgrund der Bewegung des Werkzeuges ein Strömungsfeld entwickelt, **dadurch gekennzeichnet, dass** die auf das Werkzeug (WZ) wirkende Kraft ($F_x$, $F_y$) und/oder das Drehmoment ($M_R$) durch das Fluid ermittelt wird und dass aus der Veränderung der Kraft (Fund/oder des Drehmoments der Abstand (a) zwischen dem Werkzeug und der dem Werkzeug zugewandten Oberfläche des Werkstücks ermittelt wird.

2. Verfahren nach Anspruch 1, **dadurch gekennzeichnet, dass** als umgebendes Fluid Luft vorgesehen ist.

3. Verfahren nach Anspruch 1, **dadurch gekennzeichnet, dass** als umgebendes Fluid (F) ein flüssiges Schmiermittel vorgesehen ist.

4. Verfahren nach einem der Ansprüche 1 bis 3, **dadurch gekennzeichnet, dass** die auf das Werkzeug (WZ) wirkende Kraft ($F_x$, $F_y$) und das Drehmoment ($M_R$) aus der Leistungsaufnahme des Antriebes des Werkzeuges bestimmt wird.

5. Verfahren nach einem der Ansprüche 1 bis 4, **dadurch gekennzeichnet, dass** dem Fluid eine Längs- und/oder Querströmung überlagert wird.

6. Messeinrichtung zur Durchführung eines Verfahrens nach einem der Ansprüche 1 bis 4, **dadurch gekennzeichnet, dass** Mittel zur Bestimmung der Leistungsaufnahme des Antriebes des Werkzeuges und Rechenmittel zur Bestimmung des Abstands(a) zwischen dem Werkzeug (WZ) und der dem Werkzeug zugewandten Oberfläche des Werkstücks (WS) vorgesehen sind.

7. Messeinrichtung nach Anspruch 6, **dadurch gekennzeichnet, dass** Mittel zur Datenverarbeitung vorgesehen sind.

8. Messeinrichtung nach Anspruch 7, **dadurch gekennzeichnet, dass** die Mittel zur Datenverarbeitung dazu eingerichtet sind, Methoden des Maschinellen Lernens durchzuführen, um so Abweichungen von Standardsituationen zu ermitteln und diese bei der Bestimmung des Abstands(a) zwischen dem Werkzeug und der dem Werkzeug zugewandten Oberfläche des Werkstücks zu berücksichtigen

9. Messeinrichtung nach einem der Ansprüche 6 bis 8, **dadurch gekennzeichnet, dass** am Werkzeug ein Impeller (IMP) zur Erzeugung einer Längsströmung im Fluid vorgesehen ist.

Fig.1a

Fig. 1b

Fig.2

Fig.3

Europäisches Patentamt
European Patent Office
Office européen des brevets

# EUROPÄISCHER RECHERCHENBERICHT

Nummer der Anmeldung

EP 25 15 0016

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2022 203088 A1 (HEIDENHAIN GMBH DR JOHANNES [DE]) 5. Oktober 2023 (2023-10-05) | 1-3,5 | INV. B23Q17/22 |
| Y | * Absatz [0072]; Abbildung 1 * ----- | 4 | ADD. B23Q11/00 |
| X | DE 101 27 972 C1 (BUDERUS SCHLEIFTECHNIK [DE]) 25. Juli 2002 (2002-07-25) * Ansprüche 1, 13-15; Abbildungen 1, 2 * ----- | 1,2 | B23Q11/10 |
| A | EP 3 641 985 B1 (ELGAN DIAMANTWERKZEUGE GMBH & CO KG [DE]) 2. August 2023 (2023-08-02) * Absatz [0066] - Absatz [0067]; Abbildungen 1-6 * ----- | 1-9 | |
| X | EP 3 302 857 B1 (FRAUNHOFER GES FORSCHUNG [DE]) 28. Juli 2021 (2021-07-28) | 6-8 | |
| Y | * Absatz [0042] - Absatz [0043] * | 4 | |
| A | ----- | 9 | |

RECHERCHIERTE SACHGEBIETE (IPC)

B23Q

Der vorliegende Recherchenbericht wurde für alle Patentansprüche erstellt

| Recherchenort | Abschlußdatum der Recherche | Prüfer |
|---|---|---|
| München | 8. Mai 2025 | Antolí Jover, Jordi |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 15 0016

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-05-2025

| Im Recherchenbericht angeführtes Patentdokument | Datum der Veröffentlichung | Mitglied(er) der Patentfamilie | Datum der Veröffentlichung |
|---|---|---|---|
| DE 102022203088 A1 | 05-10-2023 | DE 102022203088 A1 | 05-10-2023 |
| | | EP 4252962 A1 | 04-10-2023 |
| | | JP 2023147199 A | 12-10-2023 |
| | | US 2023311263 A1 | 05-10-2023 |
| DE 10127972 C1 | 25-07-2002 | KEINE | |
| EP 3641985 B1 | 02-08-2023 | CN 110944796 A | 31-03-2020 |
| | | DE 102017210187 A1 | 20-12-2018 |
| | | EP 3641985 A1 | 29-04-2020 |
| | | HU E063653 T2 | 28-01-2024 |
| | | US 2020156204 A1 | 21-05-2020 |
| | | WO 2018234114 A1 | 27-12-2018 |
| EP 3302857 B1 | 28-07-2021 | CN 107771117 A | 06-03-2018 |
| | | DE 102015210255 A1 | 08-12-2016 |
| | | EP 3302857 A1 | 11-04-2018 |
| | | ES 2892528 T3 | 04-02-2022 |
| | | JP 6817227 B2 | 20-01-2021 |
| | | JP 2018516766 A | 28-06-2018 |
| | | KR 20180009340 A | 26-01-2018 |
| | | US 2018169813 A1 | 21-06-2018 |
| | | WO 2016193090 A1 | 08-12-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 4152111 A1